(19) Europäisches Patentamt
European Patent Office
Office européen des brevets

(11) EP 3 270 212 B1

(12) **EUROPEAN PATENT SPECIFICATION**

(45) Date of publication and mention of the grant of the patent:
**23.09.2020 Bulletin 2020/39**

(21) Application number: **16761864.4**

(22) Date of filing: **11.03.2016**

(51) Int Cl.:
***G02C 7/10*** (2006.01) ***C08F 2/44*** (2006.01)
***C08F 218/14*** (2006.01) ***C08F 220/12*** (2006.01)
***C08K 5/13*** (2006.01) ***C08L 31/00*** (2006.01)
***G02B 1/04*** (2006.01)

(86) International application number:
**PCT/JP2016/057809**

(87) International publication number:
**WO 2016/143899 (15.09.2016 Gazette 2016/37)**

(54) **PLASTIC OPTICAL MEMBER**

OPTISCHES ELEMENT AUS KUNSTSTOFF

ÉLÉMENT OPTIQUE EN PLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2015 JP 2015048158**

(43) Date of publication of application:
**17.01.2018 Bulletin 2018/03**

(73) Proprietor: **Hoya Lens Thailand Ltd.**
**Pathumthani 12130 (TH)**

(72) Inventors:
- **KOUSAKA, Masahisa**
**Tokyo 161-8525 (JP)**
- **TASAKI, Natsumi**
**Tokyo 161-8525 (JP)**

(74) Representative: **Hoffmann Eitle**
**Patent- und Rechtsanwälte PartmbB**
**Arabellastraße 30**
**81925 München (DE)**

(56) References cited:
**WO-A1-2004/010169** **GB-A- 1 469 715**
**JP-A- H05 339 321** **JP-A- 2005 266 794**
**JP-A- 2005 266 794** **JP-A- 2005 338 868**
**JP-A- 2014 047 255** **JP-B2- 3 043 024**
**US-A1- 2006 114 573**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

[Technical Field]

The present invention relates to a plastic optical component, and more particularly to a plastic optical component having a high cutting ratio of blue light.

[Background Art]

In optical components such as spectacle, glare is reduced and visibility and contrast are improved by cutting light in a blue region (wavelength region of 380-500 nm). Light in the blue region (380-500 nm) is also considered to be dangerous to eye health because such rays are strong in energy and therefore can cause damage to retina. Damage caused by blue light is called "blue light hazard", the vicinity of 380-420 nm on the low wavelength side is particularly considered to be most dangerous in the vicinity, and it is desirable to cut light in this region.

To solve such a problem, for example, JP-A-2012-093689 describes a lens that includes a multilayer film disposed on the convex surface of a plastic member, the multilayer film having an average reflectance of 2-10% in a wavelength range of 400-500 nm. However, the cutting ratio of blue light measured with this lens is about 30%.

JP-B-4117231 describes a plastic lens including a specific benzophenone derivative in a plastic substrate as a plastic lens with little yellow coloring despite absorbing ultraviolet rays having a wavelength of around 400 nm.

WO 2014/133111 describes an optical material including a specific benzotriazole ultraviolet absorber as an optical material that can provide a colorless optical material which is excellent in appearance and has a high blocking effect of blue light of about 420 nm.

US 2006/114573 A1 discloses a polarized optical element comprising a polarized optical part dyed such that said optical part exhibits a curve of spectral transmittance in a wavelength range of 400-700 nm comprising (i) at least one relative maximum in a wavelength range of 400-510 nm, and (ii) at least one relative minimum in a wavelength range of 510-625 nm, wherein the ratio between the value of the factor of spectral transmittance at said at least one relative maximum and the value of the factor of spectral transmittance at said at least one relative minimum is $\geq 1.3$, and the ratio between the value of the factor of spectral transmittance at a wavelength of 700 nm and the value of the factor of spectral transmittance at said at least one relative minimum is $\geq 3.0$.

WO 2004/010169 relates to a monomer composition for optical materials for obtaining optical materials in which discoloration by UV-absorbers can be suppressed and which shows colorless transparency, which monomer composition comprises a diallyl compound as a monomer component, a UV-absorber as an additive and a compound of the formula $(R^1)(R^2)(R^3)C\text{-}OH$ (1) wherein $R^1$ is optionally substituted phenyl and $R^2$ and $R^3$ each independently are H or $C_{1\text{-}3}$-alkyl.

GB-A-1469715 discloses a UV-absorbing lens comprising a polymeric shaped body having a UV-absorber dispersed substantially uniformly throughout this body, the UV-absorber being capable of absorbing radiation in the wavelength range of 340-450 nm and being in a steady state with respect to extraction from the lens in an aqueous medium.

JP-A-2005-266794 describes a plastic lens consisting of a cured polymerizable monomer composition containing a diethyleneglycol bisallylcarbonate allyl monomer or a diallylphthalate allyl monomer, and which lens further includes a UV-absorber, such as 2,2'-dihydroxy-4,4'-dimethoxybenzophenone.

[Summary of Invention]

[Technical Problem]

When the specific benzophenone derivative described in JP-B-4117231 is used, it is possible to obtain an optical component which exhibits a high cutting ratio of ultraviolet radiation with wavelengths in the vicinity of 400 nm, but also has a high cutting ratio of blue light on a longer wavelength side.

The specific benzotriazole compound described in WO 2014/133111 is easily decomposed by radicals generated during radical polymerization of a monomer and when this compound is used in combination with an addition polymer obtained by radical polymerization of a monomer, the cutting ratio of blue light can decrease.

A problem of an embodiment of the present invention is to provide a plastic optical component having a high cutting ratio of blue light and a method for producing the same.

A problem of another embodiment of the present invention is to provide a plastic optical component having a high cutting ratio of blue light even when the plastic member includes an addition polymer obtained by radical polymerization of a monomer, and a method for producing the same.

[Solution to Problem]

As a result of comprehensive research, the inventors of the present invention have found that the above-mentioned problems can be resolved by adding a benzophenone compound of formula (1) to a plastic optical component, and this finding led to the creation of the present invention.

Thus, the present invention provides a plastic optical component comprising a benzophenone compound of formula (1):

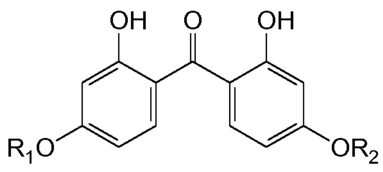

(1)

wherein $R_1$ and $R_2$ each independently are $C_{1-4}$-alkyl; and an addition polymer obtained by radical polymerization of a monomer; wherein

- the benzophenone compound is present in an amount of 0.5-3.0 parts by mass of per 100 parts by mass of a resin component forming the optical component:
- the cutting ratio of light having a wavelength of 410 nm is $\geq$ 50%; and
- the light transmittance in the wavelength range of 400-700 nm is $\geq$ 70%.

Furthermore, the present invention provides a lens substrate comprising the optical component of the present invention, as well as a plastic lens having this lens substrate.

Yet further, there is provided a method for producing the plastic optical component of the present invention as defined above, comprising curing a mixture containing a monomer, a radical initiator, and a benzophenone compound of formula (1), wherein $R_1$ and $R_2$ each independently are $C_{1-4}$-alkyl:

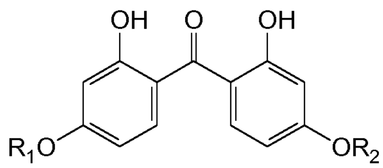

(1).

Preferred embodiments of the invention are as defined in the appended dependent claims and/or in the following detailed description.

[Advantageous Effects of Invention]

According to one embodiment of the present invention, it is possible to provide a plastic optical component having a high cutting ratio of blue light and a method for producing the same.

Further, according to the above-described embodiment, since the above-described benzophenone compound is unlikely to decompose during radical polymerization of a monomer, it is possible to provide an optical component having a high cutting ratio of blue light even when the member includes an addition polymer obtained by radical polymerization of a monomer, and a method for producing the optical component.

[Description of Embodiments]

[Optical Component]

[Benzophenone Compound]

The plastic optical component of the present invention includes a benzophenone compound of formula (1) wherein $R_1$ and $R_2$ each independently are $C_{1-4}$-alkyl (hereinafter, also simply referred to as "benzophenone compound"):

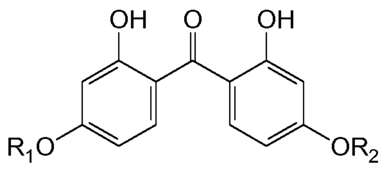

(1)

By using the benzophenone compound of formula (1), it is possible to obtain a plastic optical component excellent in absorbance of light in the blue region (380-500 nm). In addition, even when the optical component includes an addition polymer obtained by radical polymerization of a monomer, the benzophenone compound is unlikely to decompose even in the presence of radicals, and a high light absorbance of the obtained optical component in the blue region can be maintained.

The number of carbon atoms in the alkyl group of $R_1$ and $R_2$ is preferably 1-3, more preferably 1 or 2, and still more preferably 1.

Examples of $R_1$ and $R_2$ include methyl, ethyl, n-propyl, iso-propyl, n-butyl, sec-butyl, iso-butyl, and tert-butyl. Among these, methyl and ethyl are preferable, and methyl is more preferable.

Examples of the benzophenone compound include 2,2'-dihydroxy-4,4'-dimethoxybenzophenone, 2,2'-dihydroxy-4,4'-diethoxybenzophenone, 2,2'-dihydroxy-4,4'-di-n-propyloxybenzophenone, 2,2'-dihydroxy-4,4'-di-iso-propyloxybenzophenone, 2,2'-dihydroxy-4,4'-di-n-butyloxybenzophenone, 2,2'-dihydroxy-4,4'-di-sec-butyloxybenzophenone, 2,2'-dihydroxy-4,4'-di-iso-butyloxybenzophenone, and 2,2'-dihydroxy-4,4'-di-tert-butyloxybenzophenone.

Among them, the benzophenone compound is preferably 2,2'-dihydroxy-4,4'-dimethoxybenzophenone to increase the cutting ratio of blue light.

The content of the benzophenone compound is ≥ 0.5 pbm, preferably ≥ 1.0 pbm with respect to 100 pbm of the resin component forming the optical component to increase the cutting ratio of blue light. This content is also ≤ 3.0 pbm, preferably ≤ 2.5 pbm and more preferably ≤ 2.0 pbm with respect to 100 pbm of the resin component forming the optical component to increase the cutting ratio of blue light.

[Addition Polymer]

The optical component of the present invention preferably includes an addition polymer obtained by radical polymerization of a monomer. The addition polymer is preferably a matrix of the optical component.

Since the benzophenone compound is unlikely to decompose during radical polymerization of a monomer, it is possible to obtain an optical component having a high cutting ratio of blue light even when the optical component includes the addition polymer obtained by radical polymerization of a monomer.

The content of the addition polymer in the optical component is preferably ≥ 60 mass-%, more preferably ≥ 70 mass-%, even more preferably ≥ 80 mass-%, and for example, preferably ≤ 100 mass-%, and more preferably ≤ 99 mass-%.

To obtain a three-dimensionally crosslinked optical resin, it is preferable that the monomer have two or more polymerizable unsaturated bonds in a molecule.

Examples of the polymerizable unsaturated bonds include a (meth)acrylate group, an allyl group and a vinyl. The (meth)acrylate group is at least one of a methacrylate group and an acrylate group.

Among these, at least one of a methacrylate group and an allyl group is preferable.

As the monomer having two or more polymerizable unsaturated bonds in a molecule, it is preferable that diethylene glycol bis-allyl carbonate be included, and it is more preferable that diethylene glycol bis-allyl carbonate, benzyl methacrylate, diallyl phthalate, and an alkyl methacrylatethe with a $C_{1-4}$-alkyl group be included.

The compounding amount of diethylene glycol bis-allyl carbonate is preferably ≥ 5 mass-%, more preferably ≥ 10 mass-%, even more preferably ≥ 20 mass-%, and also preferably ≤ 100 mass-%, more preferably ≤ 80 mass-%, even more preferably ≤ 50 mass-%, and still more preferably ≤ 40 mass-% with respect to the total amount of the monomer.

Further, when diethylene glycol bis-allyl carbonate is used in combination with benzyl methacrylate, diallyl phthalate, and an alkyl methacrylate with a $C_{1-4}$-alkyl group, from the viewpoint of prevention of cloudiness and striae generated during the production process, it is preferable that the compounding amount of diethylene glycol bis-allyl carbonate be ≥ 5 mass-%, more preferably ≥ 10 mass-%, even more preferably ≥ 20 mass-%, and also preferably ≤ 40 mass-%, and more preferably ≤ 35 mass-% with respect to the total amount of the monomer.

To prevent cloudiness and striae generated during the production process and to prevent yellowing, the compounding amount of benzyl methacrylate is preferably ≥ 5 mass-%, more preferably ≥ 10 mass-%, and even more preferably ≥ 15 mass-%, and also preferably ≤ 40 mass-%, more preferably ≤ 30 mass-%, and even more preferably ≤ 25 mass-% with respect to the total amount of the monomer.

Diallyl phthalate can be exemplified by one or two selected from diallyl isophthalate and diallyl terephthalate.

To improve formability and increase the refractive index, the compounding amount of the diallyl phthalate is preferably ≥ 14 mass-%, more preferably ≥ 20 mass-%, and even more preferably ≥ 30 mass-%, and also preferably ≤ 88 mass-%, more preferably ≤ 70 mass-%, and even more preferably ≤ 60 mass-% with respect to the total amount of the monomer.
Examples of the alkyl methacrylate with a $C_{1-4}$-alkyl group include at least one of methyl methacrylate, ethyl methacrylate, n-propyl methacrylate, isopropyl methacrylate, n-butyl methacrylate, sec-butyl methacrylate, isobutyl methacrylate, and tert-butyl methacrylate.
To improve releasability and moldability, the compounding amount of the alkyl methacrylate is preferably ≥ 1 mass-%, more preferably ≥ 2 mass-%, and even more preferably ≥ 3 mass-%, and also preferably ≤ 6 mass-% and more preferably ≤ 5 mass-% with respect to the total amount of the monomer.

[Other Polymer]

Examples of resin components for forming the plastic optical component of the present invention, other than the addition polymer, include a (thio)urethane resin, an episulfide resin, a polycarbonate resin, a polyamide resin and a polyester resin.

((Thio)urethane Resin)

In the present invention, the monomer for forming the (thio)urethane resin is the monomer for preparing a polythiourethane lens or a polyurethane lens, specific examples thereof being obtained from a combination of a polyisocyanate compound and a polythiol compound or from a combination of a polyisocyanate compound and a polyol compound.
Examples of the polyisocyanate compounds include: alicyclic isocyanate compounds such as bis(isocyanatomethyl)cyclohexane, bis(isocyanatomethyl)bicyclo [2.2.1] heptane, hydrogenated 2,6-tolylene diisocyanate, hydrogenated meta- and para-phenylene diisocyanate, hydrogenated 2,4-tolylene diisocyanate, hydrogenated diphenylmethane diisocyanate, hydrogenated metaxylylene diisocyanate, hydrogenated paraxylylene diisocyanate and isophorone diisocyanate; isocyanate compounds having no alicyclic or aromatic ring, such as meta- and para-phenylene diisocyanate, 2,6-tolylene diisocyanate, 2,4-tolylene diisocyanate, 4,4'-diphenylmethane diisocyanate, meta- and para-xylylene diisocyanato[bis(isocyanatomethyl)benzene], meta- and para-tetramethylxylylene diisocyanate, 2,6-naphthalene diisocyanate, 1,5-naphthalene diisocyanate, hexamethylene diisocyanate, octamethylene diisocyanate, 2,2,4-trimethylhexamethylene diisocyanate, tetramethylene diisocyanate, biuret reaction product of hexamethylene diisocyanate, trimer of hexamethylene diisocyanate, lysine diisocyanate, lysine triisocyanate, 1,6,11-undecane triisocyanate and triphenylmethane triisocyanate; and sulfur-containing isocyanate compounds such as diphenyl disulfide-4,4'-diisocyanate, 2,2'-dimethyldiphenyl disulfide-5,5'-diisocyanate, 3,3'-dimethyldiphenyl disulfide-5,5'-diisocyanate, 3,3'-dimethyldiphenyl disulfide-6,6'-diisocyanate, 4,4'-dimethyldiphenyl disulfide-5,5'-diisocyanate, 3,3'-dimethoxydiphenyl disulfide-4,4'-diisocyanate, 4,4'-dimethoxydiphenyl disulfide-3,3'-diisocyanate, diphenylsulfone-4,4'-diisocyanate, diphenylsulfone-3,3'-diisocyanate, benzylidenesulfone-4,4'-diisocyanate, diphenylmethanesulfone-4,4'-diisocyanate, 4-methyldiphenylmethanesulfone-2,4'-diisocyanate, 4,4'-dimethoxydiphenylsulfone-3,3'-diisocyanate, 3,3'-dimethoxy-4,4'-diisocyanatodibenzylsulfone, 4,4'-dimethyldiphenylsulfone-3,3'-diisocyanate, 4,4'-di-tert-butyldiphenylsulfone-3,3'-diisocyanate, 4,4'-dimethoxybenzene ethylene disulfone-3,3'-diisocyanate, 4,4'-dichlorodiphenylsulfone-3,3'-diisocyanate, 4-methyl-3-isocyanatobenzenesulfonyl-4'-isocyanatophenol ester, 4-methoxy-3-isocyanatobenzenesulfonyl-4'-isocyanatophenol ester, 4-methyl-3-isocyanatobenzenesulfonylanilide-3'-methyl-4'-isocyanate, dibenzenesulfonyl-ethylenediamine-4,4'-diisocyanate, 4,4'-dimethoxybenzenesulfonyl-ethylenediamine - 3,3'-diisocyanate, 4-methyl-3-isocyanatobenzenesulfonylanilide-4-methyl-3'-isocyanate, thiophene-2,5-diisocyanate, thiophene-2,5-diisocyanatomethyl, 1,4-dithiane-2,5-diisocyanate, 1,4-dithiane-2,5-diisocyanatomethyl, 1, 4-dithiane-2,3-diisocyanatomethyl, 1,4-dithiane-2-isocyanatomethyl-5-isocyanatopropyl, 1,3-dithiolane-4,5-diisocyanate, 1,3-dithiolane-4,5-diisocyanatomethyl, 1,3-dithiolane-2-methyl-4,5-diisocyanatomethyl, 1,3-dithiolane-2,2-diisocyanatoethyl, tetrahydrothiophene-2,5-diisocyanate, tetrahydrothiophene-2,5-diisocyanatomethyl, tetrahydrothiophene-2,5-diisocyanatoethyl and tetrahydrothiophene-3,4-diisocyanatomethyl. Among them, alicyclic isocyanate compounds are preferred.
Examples of the polythiol compound include aliphatic thiols such as methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, tetrakis(mercaptomethyl)methane, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, thiomalic acid bis(2-mercaptoethyl ester), 2,3-dimercaptosuccinic acid (2-mercaptoethyl ester), 2,3-dimercapto-1-propanol (2-mercaptoacetate), 2,3-dimercapto-1-propanol (3-mercaptoacetate), diethylene glycol bis(2-mercaptoacetate), diethylene glycol bis(3-mercaptopropionate), 1, 2-dimercaptopropyl methyl ether, 2,3-dimercaptopropyl methyl ether, 2,2-bis(mercaptomethyl)-1,3-propanedithiol, bis(2-mercaptoethyl) ether, ethylene glycol bis(2-mercaptoacetate), ethylene glycol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate) and 1,2-bis(2-mercaptoethylthio)-3-mercaptopropane; aromatic thiols such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,2-bis(mercaptomethoxy)benzene, 1,3-bis(mercaptomethoxy)benzene, 1,4-bis(mercapto methoxy)benzene, 1,2-bis(mercaptoethoxy)benzene, 1,3-bis(mercaptoethoxy)benzene, 1,4-bis(mercaptoethoxy)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2,3-tris(mercaptomethoxy)benzene, 1,2,4-tris(mercaptomethoxy)benzene, 1,3,5-tris(mercaptomethoxy)benzene, 1,2,3-tris(mercaptoethoxy)benzene, 1,2,4-tris(mercaptoethoxy)benzene, 1,3,5-tris(mercaptoethoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, 1,2,3,5-tetrakis(mercaptomethyl)benzene, 1,2,4,5-tetrakis(mercaptomethyl)benzene, 1,2,3,4-tetrakis(mercaptoethyl)benzene, 1,2,3,5-tetrakis(mercaptoethyl)benzene, 1,2,4,5-tetrakis(mercaptoethyl)benzene, 1,2,3,4-tetrakis(mercaptoethyl)benzene, 1,2,3,5-tetrakis(mercaptomethoxy)benzene, 1,2,4,5-tetrakis(mercaptomethoxy)benzene, 1,2,3,4-tetrakis(mercaptoethoxy)benzene, 1,2,3,5-tetrakis(mercaptoethoxy)benzene, 1,2,4,5-tetrakis(mercaptoethoxy)benzene, 2,2'-dimercaptobiphenyl, 4,4'-dimercaptobiphenyl, 4,4'-dimercaptobibenzyl, 2,5-toluenedithiol, 3,4-toluenedithiol, 1,4-naphthalenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracenedimethanethiol, 1,3-di(p-methoxyphenyl)propane-2,2-dithiol, 1,3-diphenylpropane-2,2-dithiol, phenylmethane-1,1-dithiol and 2,4-di(p-mercaptophenyl) pentane; halogen-substituted (e.g. chlorine-substituted, bromine-substituted,) aromatic thiols such as 2,5-dichlorobenzene-1,3-dithiol, 1,3-di(p-chlorophenyl)propane-2,2-dithiol, 3,4,5-tribromo-1,2-dimercaptobenzene and 2,3,4,6-tetrachloro-1,5-bis(mercaptomethyl)benzene; aromatic thiols including a sulfur atom in addition to a mercapto group, such as 1,2-bis(mercaptomethylthio)benzene, 1,3-bis(mercaptomethylthio)benzene, 1,4-bis(mercaptomethylthio)benzene, 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, 1,3,5-tris(mercaptoethylthio)benzene, 1,2,3,4-tetrakis(mercaptomethylthio)benzene, 1,2,3,5-tetrakis(mercaptomethylthio)benzene, 1,2,4,5-tetrakis(mercaptomethylthio)benzene, 1,2,3,4-tetrakis(mercaptoethylthio)benzene, 1,2,3,5-tetrakis(mercaptoethylthio)benzene and 1,2,4,5-tetrakis(mercaptoethylthio)benzene, and nuclear alkylated products thereof; aliphatic thiols containing a sulfur atom in addition to a mercapto group, such as bis(mercaptomethyl) sulfide, bis(mercaptoethyl) sulfide, bis(mercaptopropyl) sulfide, bis(mercaptomethylthio)methane, bis(2-mercaptoethylthio)methane, bis(3-mercaptopropylthio)methane 1,2-bis(2-mercaptomethylthio)ethane, 1,2-bis(2-mercaptoethylthio)ethane, 1,2-bis(3-mercaptopropylthio)ethane, 1,3-bis(mercaptomethylthio)propane, 1,3-bis(2-mercaptoethylthio)propane, 1,3-bis(3-mercaptopropylthio)propane, 1,2-bis(2-mercaptoethylthio)-3-mercaptopropane, 2-mercaptoethylthio-1,3-propanedithiol, 1,2,3-tris(mercaptomethylthio)propane, 1,2,3-tris(2-mercaptoethylthio)propane, 1,2,3-tris(3-mercaptopropylthio) propane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl) sulfide, 2,5-dimercapto-1,4-dithiane, bis(mercaptomethyl) disulfide, bis(mercaptoethyl) disulfide and bis(mercaptopropyl) disulfide, and thioglycolic acid and mercaptopropionic acid esters thereof, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxypropyl sulfide bis(2-mercaptoacetate), hydroxypropyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropionate), hydroxypropyl disulfide bis(2-mercaptoacetate), hydroxypropyl disulfide bis(3-mercaptopropionate), 2-mercaptoethyl ether bis(2-mercaptoacetate), 2-mercaptoethyl ether bis(3-mercaptopropionate), 1,4-dithiane-2,5-diol bis(2-mercaptoacetate), 1,4-dithiane-2,5-diol bis(3-mercaptopropionate), thioglycolic acid (2-mercaptoethyl ester), thiodipropionic acid bis(2-mercaptoethyl ester), 4,4'-thiodibutyric acid bis(2-mercaptoethyl ester), dithiodiglycolic acid bis(2-mercaptoethyl ester), dithiodipropionic acid bis(2-mercaptoethyl ester), 4,4'-dithiodibutyric acid bis(2-mercaptoethyl ester), thiodiglycolic acid bis(2,3-dimercaptopropyl propyl ester), thiodipropionic acid bis(2,3-dimercaptopropyl ester), dithiodiglycolic acid bis(2,3-dimercaptopropyl ester), dithiodipropionic acid bis(2,3-dimercaptopropyl ester), 4-mercaptomethyl-3,6-dithiaoctane-1,8-dithiol, bis(mercaptomethyl)-3,6,9-trithia-1,11-undecane dithiol and bis(1,3-dimercapto-2-propyl) sulfide; and heterocyclic compounds including a sulfur atom in addition to a mercapto group such as 3,4-thiophenedithiol, tetrahydrothiophene-2,5-dimercaptomethyl, 2,5-dimercapto-1,3,4-thiadiazole, 2,5-dimercapto-1,4-dithiane and 2,5-dimercaptomethyl-1,4-dithiane.

Examples of the polyol compounds include aliphatic polyols such as ethylene glycol, diethylene glycol, propylene glycol, dipropylene glycol, butylene glycol, neopentyl glycol, glycerin, trimethylolethane, trimethylolpropane, butanetriol, 1,2-methyl glucoside, pentaerythritol, dipentaerythritol, tripentaerythritol, triethylene glycol, polyethylene glycol, tris(2-hydroxyethyl) isocyanurate, cyclobutanediol, cyclopentanediol, cyclohexanediol, cycloheptanediol, cyclooctanediol, bicyclo [4.3.0]-nonanediol, dicyclohexanediol, tricyclo [5.3.1.1] dodecanediol, spiro [3.4] octanediol and butylcyclohexanediol; aromatic polyols such as dihydroxynaphthalene, trihydroxynaphthalene, tetrahydroxynaphthalene, dihydroxybenzene, benzenetriol, trihydroxyphenanthrene, bisphenol A, bisphenol F, xylylene glycol and tetrabromobisphenol A, and products of addition reaction thereof with alkylene oxides such as ethylene oxide and propylene oxide; bis-[4-(hydroxyethoxy)phenyl] sulfide, bis-[4-(2-hydroxypropoxy) phenyl] sulfide, bis-[4-(2,3-dihydroxypropoxy)phenyl] sulfide, bis-[4-(4-hydroxycyclohexyloxy)phenyl] sulfide, bis-[2-methyl-4-(hydroxyethoxy)-6-butylphenyl] sulfide and compounds obtained by adding an average of 3 molecules or less of ethylene oxide and/or propylene oxide per one hydroxyl group to these compounds; and polyols including a sulfur atom, such as di-(2-hydroxyethyl) sulfide, 1,2-bis-(2-hydroxyethylmercapto)ethane, bis(2-hydroxyethyl) disulfide, 1,4-dithiane-2,5-diol, bis(2,3-dihydroxypropyl) sulfide, tetrakis(4-hydroxy-2-thiabutyl)methane, bis(4-hydroxyphenyl) sulfone (trade name BISPHENOL S), tetrabromobisphenol S, tetramethylbisphenol S, 4,4'-thiobis(6-tert-butyl-3-methylphenol) and 1,3-bis(2-hydroxyethylthioethyl)cyclohexane.

Further, to modify physical properties such as heat resistance and refractive index, it is also possible to add another monomer such as diethylene glycol allyl carbonate in addition to the monomer forming the episulfide resin which is described hereinbelow.

(Episulfide resin)

In the present invention, a monomer forming an episulfide resin, which is also referred to as a monomer forming an epithio structure, designates a monomer having an episulfide group (epithio group) or a mixed monomer including such a monomer. Examples of the monomers having an episulfide group include episulfide compounds having an alicyclic skeleton such as 1,3- and 1,4-bis(β-epithiopropylthio)cyclohexane, 1,3- and 1,4-bis(β-epithiopropylthiomethyl)cyclohexane, bis[4-(β-epithiopropylthio)cyclohexyl]methane, 2,2-bis[4-(β-epithiopropylthio)cyclohexyl]propane and bis[4-(β-epithiopropylthio)cyclohexyl] sulfide; episulfide compounds having an aromatic skeleton such as 1,3- and 1,4-bis(β-epithiopropylthio)benzene, 1,3- and 1,4-bis(β-epithiopropylthiomethyl)benzene, bis[4-(β-epithiopropylthio)phenyl]methane, 2,2-bis[4-(β-epithiopropylthio)phenyl]propane, bis[4-(β-epithiopropylthio)phenyl]sulfide, bis[4-(β-epithiopropylthio)phenyl]sulfine and 4,4-bis(β-epithiopropylthio)biphenyl; episulfide compounds having a dithiane skeleton such as 2,5-bis(β-epithiopropylthiomethyl)-1,4-dithiane, 2,5-bis(β-epithiopropylthioethylthiomethyl)-1,4-dithiane, 2,5-bis(β-epithiopropylthioethyl)-1,4-dithiane and 2,3,5-tri(β-epithiopropylthioethyl)-1,4-dithiane; and episulfide compounds having an aliphatic skeleton such as 2-(2-β-epithiopropylthioethylthio)-1,3-bis(β-epithiopropylthio)propane, 1,2-bis[(2-β-epithiopropylthioethyl)thio]-3-(β-epithiopropylthio)propane, tetrakis(β-epithiopropylthiomethyl)methane, 1,1,1-tris(β-epithiopropylthiomethyl)propane and bis-(β-epithiopropyl) sulfide.

To modify physical properties of a lens, such as impact resistance and processability, it is also possible to add another monomer for an optical component such as the monomer for forming the (thio)urethane resin which is described hereinabove.

Further, in the present invention, a diethylene glycol bis-allyl carbonate type monomer can be added to the monomer forming the (thio)urethane resin and/or the episulfide resin.

The diethylene glycol bis-allyl carbonate type monomer is diethylene glycol bis-allyl carbonate alone or a mixed monomer of diethylene glycol bis-allyl carbonate and a monomer copolymerizable therewith. Specific examples of the copolymerizable monomers include aromatic vinyl compounds such as styrene, α-methylstyrene, vinyltoluene, chlorostyrene, chloromethylstyrene and divinylbenzene; mono(meth)acrylates such as methyl (meth)acrylate, n-butyl (meth)acrylate, n-hexyl (meth)acrylate, cyclohexyl (meth)acrylate, 2-ethylhexyl (meth)acrylate, methoxydiethylene glycol (meth)acrylate, methoxypolyethylene glycol (meth)acrylate, 3-chloro-2-hydroxypropyl (meth)acrylate, stearyl (meth)acrylate, lauryl (meth)acrylate, phenyl (meth)acrylate, glycidyl (meth)acrylate and benzyl methacrylate; mono(meth)acrylates having a hydroxy group such as 2-hydroxyethyl (meth)acrylate, 2-hydroxypropyl (meth)acrylate, 3-hydroxypropyl (meth)acrylate, 3-phenoxy-2-hydroxypropyl (meth)acrylate and 4-hydroxybutyl (meth)acrylate; di(meth)acrylates such as ethylene glycol di(meth)acrylate, diethylene glycol di(meth)acrylate, triethylene glycol di(meth)acrylate, polyethylene glycol di(meth)acrylate, 1,3-butylene glycol di(meth)acrylate, 1,6-hexanediol di(meth)acrylate, neopentyl glycol di(meth)acrylate, polypropylene glycol di(meth)acrylate, 2-hydroxy-1,3-di(meth)acryloxylpropane, 2,2-bis[4-((meth)acryloxyethoxy)phenyl]propane, 2,2-bis[4-((meth)acryloxy-diethoxy)phenyl]propane and 2,2-bis[4-((meth)acryloxy-polyethoxy)phenyl]propane; tri(meth)acrylates such as trimethylolpropane trimethacrylate and tetramethylolmethane trimethacrylate; tetra(meth)acrylate such as tetramethylolmethane tera(meth)acrylate ((meth)acrylate in the present description means methacrylate or acrylate); diallyl phthalate, diallyl isophthalate and diallyl terephthalate.

When a monomer forming a thiourethane structure is used as a main component in the plastic optical component of the present invention, polymerization is performed from starting materials in which the total mass of the polyisocyanate compound and the polythiol compound is preferably ≥ 60 pbm, more preferably ≥ 80 pbm, and even more preferably ≥ 90 pbm with respect to 100 pbm of the total amount of the monomer.

Further, when a monomer forming an episulfide resin is used as a main component, polymerization is performed from starting materials in which the amount of the compound having an episulfide group is preferably ≥ 60 pbm, more

preferably ≥ 80 pbm, and even more preferably ≥ 90 pbm with respect to 100 pbm of the total amount of the monomer.

[Production method]

The method for producing an optical component preferably includes a step of curing a mixture including a monomer, a benzophenone compound of formula (1), and a radical initiator.

The step of curing is preferably carried out by casting the mixture into a mold for a lens assembled of a glass or a metal mold and a resin gasket or a tape and polymerizing and curing the monomer by heating or ultraviolet irradiation. The mold for the lens is preferably assembled of a glass mold and a resin gasket or a tape.

Examples of the radical initiator include 1,1-azobiscyclohexane carbonate, diisopropyl peroxycarbonate, 1,1'-azobiscyclohexane nitrate and di-tert-butyl.

The compounded amount of the radical initiator is preferably ≥ 0.1 pbm, more preferably ≥ 0.5 pbm, even more preferably ≥ 1.0 pbm and also preferably ≤ 10 pbm, more preferably ≤ 8 pbm, and even more preferably ≤ 5 pbm with respect to 100 pbm of the monomer.

Where the resin component forming the optical component of the present invention is other than the addition polymer described above, a method for producing the optical component can involve adding one or more kinds of benzophenones selected from the benzophenone compounds of formula (1), for example, to a monomer that forms the (thio)urethane resin and/or episulfide resin, mixing, and then polymerizing the monomer. The polymerization method of the monomer is not particularly limited, but cast polymerization is usually used. Thus, an optical component is obtained by mixing one or more benzophenone compounds selected from the benzophenone compounds of formula (1) with the above-mentioned monomer, casting the liquid mixture into a lens mold, and heating usually between -20°C and 150°C.

In addition, auxiliary agents such as an internal release agent, an antioxidant, a fluorescent whitening agent and a bluing agent can be added as required. Further, the optical component of the present invention can be subjected to dyeing treatment by using a colorant.

[Structure of Optical Component]

The plastic optical component of the present invention may be a lens substrate or a functional layer, but to increase the cutting ratio of blue light with a small content, it is preferably a lens substrate, more preferably a spectacle lens substrate.

The plastic optical component of the present invention is preferably a plastic lens having a lens substrate, more preferably a plastic lens having a lens substrate and a functional layer provided on the lens substrate. The plastic lens is preferably a plastic lens for spectacles.

The functional layer may be exemplified by at least one selected from a cured film, a primer layer, an antireflection film and a water-repellent film.

The cured film is provided for improving the scratch resistance and is preferably formed by coating a coating liquid having a fine particulate inorganic substance such as an organosilicon compound, tin oxide, silicon oxide, zirconium oxide or titanium oxide.

The primer layer is provided for improving impact resistance and includes, for example, polyurethane as a main component. Here, the polyurethane content in the primer layer is preferably ≥ 50 mass-%.

The antireflection film can be obtained by laminating, for example, silicon oxide, titanium dioxide, zirconium oxide or tantalum oxide.

The water-repellent film can be formed using an organosilicon compound having a fluorine atom.

In the plastic optical component of the present invention, the site containing the benzophenone compound of formula (1) is not particularly limited, and the benzophenone compound may be included in the functional layer or the lens substrate. More specifically, the benzophenone compound may be contained in any of the lens substrate, the cured film, the primer layer, the antireflection film, and the water-repellent film, but is preferably included in the lens substrate.

A plastic optical component in which a benzophenone compound is included in a functional layer can be produced by preparing a composition in which the benzophenone compound, the resin component and, if necessary, a solvent are mixed, coating the composition at least on one surface of the lens substrate and curing to form a functional layer.

When the plastic optical component of the present invention is used as a lens substrate, the refractive index of the lens substrate is not particularly limited but is 1.50-1.60.

The light cutting ratio of the plastic optical component of the present invention in the blue region of 380-500 nm is preferably ≥ 35%, and more preferably ≥ 40%, to protect the eyes. The light cutting ratio is not particularly limited but is preferably ≤ 60%, and more preferably ≤ 50%.

The cutting ratio of the plastic optical component of the present invention with respect to light having a wavelength of 410 nm is ≥ 50%, and preferably ≥ 60%.

The plastic optical component of the present invention is preferably transparent. In the present description, "transparent" means that the far side is visible through the member.
Light transmittance of the optical component of the present invention in a wavelength range of 400-700 nm is ≥ 70%, preferably ≥ 80%, and more preferably ≥ 90% to ensure transparency of the optical element.
In the present invention, matters described as examples or preferred ranges in the detailed description of the invention may be arbitrarily combined with respect to the examples, contents, and physical properties of each of the above-mentioned components.
Further, where the composition described in the detailed description of the invention is adjusted to the composition described in the examples, the invention can be carried out in the same manner as in the examples over the entire composition range claimed.

Examples

The present invention will be specifically described hereinbelow by way of examples. Further, the plastic optical component is exemplified by a plastic lens. Physical properties of the produced plastic lens were obtained by the following methods.

(1) Measurement of light ray cutting ratio in the blue region (wavelength region of 380-500 nm) (hereinafter also referred to as "blue light cutting ratio")

The transmittance at a wavelength of 380-500 nm was measured with a spectrophotometer (U-4100, Hitachi, Ltd.), and the blue light cutting ratio was calculated by the following formula from the transmittance (T) (13 points) for every 10 nm between the wavelengths.

$$\text{Blue light cutting ratio} = 100 - \frac{\sum_{380nm}^{500nm}(T)}{13}$$

(2) Measurement of light cutting ratio at the wavelength of 410 nm

The light transmittance at a wavelength of 410 nm was measured using the spectrophotometer, and the light cutting ratio was calculated by the following formula.

$$\text{Light cutting ratio (\%)} = 100 - (\text{transmittance at 410 nm})$$

(3) Measurement of light transmittance in the wavelength range of 400-700 nm

The transmittance at a wavelength of 400-700 nm was measured using the spectrophotometer (U-4100, manufactured by Hitachi, Ltd.).

Example 1

A total of 1.0 pbm of 2,2'-dihydroxy-4,4'-dimethoxy benzophenone was added to 30 pbm of diethylene glycol bis(allyl carbonate) (hereinafter, also referred to as "DEGBAC"), 20 pbm of benzyl methacrylate (hereinafter, also referred to as "BzMA"), 45 pbm of diallyl isophthalate (hereinafter also referred to as "DAIP"), and 5 pbm of methyl methacrylate (hereinafter also referred to as "MMA") as monomers, and then 3 pbm of diisopropyl peroxycarbonate as a radical initiator was added to prepare a mixture. No release agent was added to the mixture.
Next, the mixture was cast into a mold composed of two glass molds and a resin gasket. The temperature was then raised from 40°C to 90°C over 24 hours to polymerize the monomers. After heating and polymerization, the mold was immersed in a methylene chloride - alkali mixed washing solution after only the gasket was removed therefrom, and then a plastic lens made of the cured copolymer was removed from the mold and further heat-treated for 1 hours at 120°C.
The obtained plastic lens had a refractive index (nD) of 1.55 and a light transmittance of 91% in a wavelength region of 400-700 nm.

Example 2

A plastic lens was obtained under the same conditions as in Example 1, except that "30 pbm of diethylene glycol bis(allyl carbonate), 20 pbm of benzyl methacrylate, 45 pbm of diallyl isophthalate and 5 pbm of methyl methacrylate" were replaced with "100 pbm of DEGBAC".

The obtained plastic lens had a refractive index (nD) of 1.55 and a light transmittance of 91% in a wavelength region of 400-700 nm.

Comparative Example 1

A plastic lens was obtained under the same conditions as in Example 1, except that "2,2'-dihydroxy-4,4'-dimethoxy benzophenone" was replaced with "2,2'-dihydroxy-4-octyloxy benzophenone".

[Table 1]

Table 1

| | Compound | Polymer | Light cutting ratio in blue region | Light cutting ratio at 410 nm | Light transmittance in 400-700 nm range |
|---|---|---|---|---|---|
| Example 1 | 1-1 | 2-1 | 41% | 95% | 91% |
| Example 2 | 1-1 | 2-2 | 41% | 95% | 91% |
| Comparative Example 1 | C1-1 | 2-1 | 21% | 15% | 91% |

The meaning of various symbols in the table is explained below.

Compound 1-1: 2,2'-dihydroxy-4,4'-dimethoxybenzophenone
Compound C1-1: 2,2'-dihydroxy-4-octyloxybenzophenone
Polymer 2-1: polymer of 30 pbm of DEGBAC, 20 pbm of BzMA, 45 pbm of DAIP and 5 pbm of MMA
Polymer 2-2: polymer of DEGBAC

[Industrial Applicability]

According to the present invention, it is possible to provide a plastic optical component having a high cutting ratio of blue light and a method for producing the optical component which can be used, for example, for a spectacle lens.

**Claims**

1. A plastic optical component comprising a benzophenone compound of formula (1):

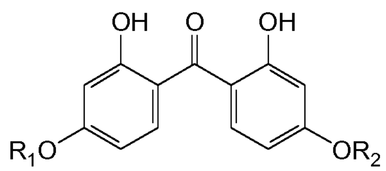

(1)

wherein $R_1$ and $R_2$ each independently are $C_{1-4}$-alkyl; and an addition polymer obtained by radical polymerization of a monomer; wherein

- the benzophenone compound is present in an amount of 0.5-3.0 parts by mass of per 100 parts by mass of a resin component forming the optical component:
- the cutting ratio of light having a wavelength of 410 nm is ≥ 50%; and

- the light transmittance in the wavelength range of 400-700 nm is ≥ 70%.

2. The optical component of claim 1, wherein the benzophenone compound is 2,2'-dihydroxy-4,4'-dimethoxybenzophenone.

3. The optical component of claim 1 or 2, wherein the light cutting ratio in a wavelength region of 380-500 nm is ≥ 35%.

4. The optical component of any of claims 1-3, wherein the monomer includes a monomer having two or more polymerizable unsaturated bonds in a molecule.

5. The optical component of any of claims 1-4, wherein the monomer includes diethylene glycol bis-allyl carbonate.

6. The optical component of any of claims 1-5, wherein the monomer includes diethylene glycol bis-allyl carbonate, benzyl methacrylate, diallyl phthalate and alkyl methacrylate having a $C_{1-4}$-alkyl group.

7. A lens substrate comprising the optical component of any of claims 1-6.

8. A plastic lens having the lens substrate of claim 7.

9. A method for producing the plastic optical component of any of claims 1-6, comprising curing a mixture containing a monomer, a radical initiator, and a benzophenone compound of formula (1), wherein $R_1$ and $R_2$ each independently are $C_{1-4}$-alkyl:

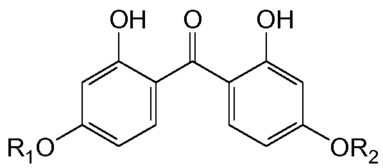

(1).

## Patentansprüche

1. Optische Komponente aus Kunststoff, umfassend eine Benzophenonverbindung der Formel (1):

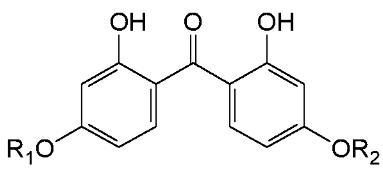

(1)

worin $R_1$ und $R_2$ jeweils unabhängig für $C_{1-4}$-Alkyl stehen; und ein Additionspolymer, das durch radikalische Polymerisation eines Monomers erhalten ist; worin

- die Benzophenonverbindung in einer Menge von 0,5-3,0 Massenteile pro 100 Massenteile einer Harzkomponente vorhanden ist, die die optische Komponente bildet;
- der Anteil an abgeschnittenem Licht mit einer Wellenlänge von 410 nm ≥ 50% beträgt; und
- die Lichtdurchlässigkeit im Wellenlängenbereich von 400-700 nm ≥ 70% beträgt.

2. Optische Komponente gemäß Anspruch 1, worin die Benzophenonverbindung 2,2'-Dihydroxy-4,4'-dimethoxybenzophenon ist.

3. Optische Komponente gemäß Anspruch 1 oder 2, worin der Anteil an abgeschnittenem Licht in einem Wellenlängenbereich von 380-500 nm ≥ 35% beträgt.

4. Optische Komponente gemäß mindestens einem der Ansprüche 1-3, worin das Monomer ein Monomer umfasst, das zwei oder mehr polymerisierbare ungesättigte Bindungen in einem Molekül aufweist.

5. Optische Komponente gemäß mindestens einem der Ansprüche 1-4, worin das Monomer Diethylenglycol-bisallylcarbonat umfasst.

6. Optische Komponente gemäß mindestens einem der Ansprüche 1-5, worin das Monomer Diethylenglycol-bisallylcarbonat, Benzylmethacrylat, Diallylphthalat und Alkylmethacrylat mit einer $C_{1-4}$-Alkylgruppe umfasst.

7. Linsensubstrat, das die optische Komponente gemäß mindestens einem der Ansprüche 1-6 umfasst.

8. Kunststofflinse, die das Linsensubstrat gemäß Anspruch 7 aufweist.

9. Verfahren zur Herstellung der optischen Komponente aus Kunststoff gemäß mindestens einem der Ansprüche 1-6, umfassend das Aushärten eines Gemischs, das ein Monomer, einen Radikalinitiator und eine Benzophenonverbindung der Formel (1) umfasst, worin $R_1$ und $R_2$ jeweils unabhängig voneinander für $C_{1-4}$-Alkyl stehen:

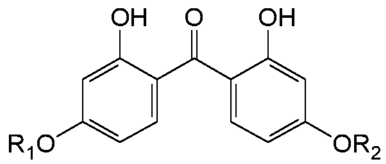

(1).

**Revendications**

1. Composant optique en plastique comprenant un composé benzophénone de formule (1) :

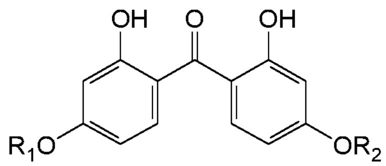

(1)

dans laquelle $R_1$ et $R_2$ sont chacun indépendamment $C_{1-4}$-alkyle ; et un polymère d'addition obtenu par polymérisation radicalaire d'un monomère ; dans lequel

- le composé benzophénone est présent dans une quantité de 0,5-3,0 parties en masse pour 100 parties en masse d'un composant de résine formant le composant optique :
- le rapport de coupe de lumière ayant une longueur d'onde de 410 nm est ≥ 50%; et
- la transmittance de lumière dans le domaine de longueur d'onde de 400-700 nm est ≥ 70%.

2. Le composant optique de la revendication 1, dans lequel le composé benzophénone est la 2,2'-dihydroxy-4,4'-diméthoxybenzophénone.

3. Le composant optique de la revendication 1 ou 2, dans lequel le rapport de coupe de lumière dans une région de longueur d'onde de 380-500 nm est ≥ 35%.

4. Le composant optique de l'une quelconque des revendications 1-3, dans lequel le monomère comporte un monomère ayant deux ou plus de deux liaisons insaturées polymérisables dans une molécule.

5. Le composant optique de l'une quelconque des revendications 1-4, dans lequel le monomère comporte du bis-allyle carbonate de di-éthylène glycol.

6. Le composant optique de l'une quelconque des revendications 1-5, dans lequel le monomère comporte du bis-allyle carbonate de di-éthylène glycol, du méthacrylate de benzyle, du phtalate de di-allyle et du méthacrylate d'alkyle ayant un groupe $C_{1-4}$-alkyle.

7. Substrat de lentille comprenant le composant optique de l'une quelconque des revendications 1-6.

**8.** Lentille en plastique ayant le substrat de lentille de la revendication 7.

**9.** Procédé de production du composant optique en plastique de l'une quelconque des revendications 1-6, comprenant le durcissement d'un mélange contenant un monomère, un initiateur radicalaire, et un composé benzophénone de formule (1), dans lequel $R_1$ et $R_2$ sont chacun indépendamment $C_{1-4}$-alkyle :

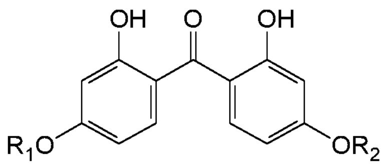

(1).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012093689 A
- JP 4117231 B
- WO 2014133111 A
- US 2006114573 A1
- WO 2004010169 A
- GB 1469715 A
- JP 2005266794 A